# EUROPEAN PATENT APPLICATION

(11) **EP 2 882 058 A1**
(43) Date of publication of application: **10.06.2015**
(21) Application number: 13825540.1
(22) Date of filing: 01.08.2013
(51) Int. Cl.: H02J 1/00, A47K 13/24, A47K 13/30, E03D 9/00, E03D 9/08

(54) **POWER CONTROL DEVICE AND INSTRUMENT COMPRISING SAME**

(30) Priority: 03.08.2012 JP 2012172635
(71) Applicant: Panasonic Intellectual Property Management Co., Ltd., Osaka-shi, Osaka 540-6207 (JP)
(72) Inventor: FUJII, Shinji, Osaka 540-6207 (JP); ASADA, Takao, Osaka 540-6207 (JP); OKUI, Noboru, Osaka 540-6207 (JP); SATOI, Takayuki, Osaka 540-6207 (JP)
(74) Representative: Schwabe - Sandmair - Marx
(86) International application number: PCT/JP2013/004654
(87) International publication number: WO 2014/020913

(57) **Abstract**

A power control device includes a main power supply (104), a use detector (111), a CPU (22) that issues an instruction to switch between a standby power mode and a normal power mode, an auxiliary power supply (109), and a transformer (115). The transformer (115) includes a primary winding (112), a secondary winding (113), and an auxiliary secondary winding (114) provided in an auxiliary power supply mode switching controller (108) including an auxiliary power supply control IC (21). In the standby power mode, the CPU (22) performs control such that commercial power supplied to the main power supply (104) is interrupted to cause the CPU(22) itself to shift to the standby power mode, and such that the auxiliary power supply control IC (21) repeats intermittent driving and stopping of the auxiliary power supply (109). Therefore, standby power can largely be reduced while an instrument is not used.

## Description

### TECHNICAL FIELD

The present invention relates to a power control device that reduces standby power consumption during non-use of an instrument, and the instrument provided with the power control device.

### BACKGROUND ART

Energy saving is increasingly important year by year because of situations of energy and electric power. Particularly, there is a demand that standby power consumption (hereinafter, referred to as "standby power") is reduced to substantially zero during non-use of the instrument.

Conventionally, for example, a toilet device that is of the instrument including a power control device that reduces the standby power by decreasing power consumed by a power supply unit during non-use of the toilet device has been proposed as this kind of power control device (for example, see PTL 1).

The power control device of the toilet device disclosed in PTL 1 includes a human body detector, a functional unit, a controller, a first power supply unit, a second power supply unit, and a power control element. The human body detector detects existence or non-existence of a human body in a toilet. The functional unit improves an environment in the toilet. The controller drives the human body detector and the functional unit. The first power supply unit supplies DC power to the human body detector and the controller. The second power supply unit converts commercial power into DC power, and supplies the DC power to the functional unit. The power control element is located at a preceding stage of the second power supply unit, and controls energization to the second power supply unit from the commercial power.

The controller of the power control device of the toilet device drives the power control element according to a detection result of the human body detector, and controls the commercial power supplied to the second power supply unit. In the case that a user does not exist in the toilet, only the power supply unit having the small power consumption is operated in the toilet device, and the standby power is decreased during non-use of the toilet device. For the use of the toilet device, the existence of the user automatically puts all functions into an operable state irrespective of an operation intention of the user. As a result, the user-friendly toilet device is constructed.

In the configuration of the power control device of the conventional toilet device, the controller turns off the power control element to turn off the energization from the commercial power to the second power supply unit in the case that the toilet device that is of the instrument is not used. Therefore, the commercial power consumed by the power supply unit itself is reduced only to the power consumed by the first power supply unit.

However, the standby power of about 0.5 W is always consumed by the first power supply unit.

That is, in the configuration of the power control device of the conventional toilet device, the second power supply unit (main power supply) that supplies the power to the functional unit that is of a large power load is turned off in the case that the instrument is not used. An operation signal of an operation unit, a detection signal of the human body detector, and temperature detection signals of various temperature detectors are processed. That is, the power control device of the conventional toilet device has the configuration in which only the first power supply unit (auxiliary power supply) that supplies the power to a small power load, such as a microcomputer, which issues an instruction to drive loads such as various heaters, a motor, and an LED, is put into an on state. Therefore, during the standby state, the microcomputer is operated at a low speed to reduce the power consumption compared with a normal operation, thereby implementing a low power consumption mode. However, the minimum power necessary to operate the first power supply unit (auxiliary power supply) is consumed even if the microcomputer is operated in the low power consumption mode. Therefore, unless the first power supply unit (auxiliary power supply) is constructed with a battery that is not the commercial power, there is a problem in that the standby power consuming the commercial power can hardly be reduced to substantially zero.

### Citation List

### Patent Literatures

PTL 1: Unexamined Japanese Patent Publication No. 2002-146878

### SUMMARY OF THE INVENTION

According to one aspect of the present invention, a power control device includes: a main power supply that supplies power to an instrument; a use detector that detects use of the instrument; a CPU that issues an instruction to switch between a standby power mode and a normal power mode in response to a signal from the use detector; an auxiliary power supply that supplies power to the CPU; and a transformer. The transformer includes a primary winding, a secondary winding, and an auxiliary secondary winding, the primary winding being provided in an auxiliary power supply input unit of the auxiliary power supply, the secondary winding being provided in an auxiliary power supply output unit, and the auxiliary secondary winding being provided in an auxiliary power supply mode switching controller including an auxiliary power supply control IC. In response to a switching instruction into the standby power mode, the CPU (control unit) performs control such that the CPU itself shifts to the standby power mode while interrupting commercial power supplied to the main power supply, and such that the auxiliary power supply control IC repeats intermittent driving and stopping of the auxiliary power supply by a current decrease of the auxiliary secondary winding due to a current decrease of the secondary winding.

In the configuration, when the condition that the CPU shifts from the normal power mode to the standby power mode is satisfied by the signal from the use detector, the CPU interrupts the commercial power supplied to the main power supply, and interrupts a secondary-side load of the auxiliary power supply. Therefore, the CPU shifts to the standby power mode that is of a low-speed mode. The auxiliary power supply control IC of the auxiliary power supply switching controller enters the standby power mode in which the intermittent driving and stopping of the auxiliary power supply are repeated by the current decrease of the auxiliary secondary winding due to the current decrease of the secondary winding.

That is, in the standby power mode, the commercial power supplied to the main power supply is interrupted to eliminate the power consumption in the main power supply and an output-side load corresponding to the functional unit of the instrument connected to the main power supply. The secondary-side load of the auxiliary power supply is interrupted, and the auxiliary power supply enters the standby power mode in which the intermittent driving and stopping are repeated. Therefore, the standby power can be reduced to substantially zero during non-use of the instrument. As a result, the power control device that largely reduces the standby power and the instrument provided with the power control device can be made.

### BRIEF DESCRIPTION OF DRAWINGS

FIG. 1 is a perspective view illustrating appearances of a power control device and a sanitary washing device that is of an instrument provided therewith according to an exemplary embodiment of the present invention.
FIG. 2 is a control block diagram of a control system of the sanitary washing device according to the exemplary embodiment of the present invention.
FIG. 3 is a perspective view illustrating an appearance of a remote controller according to the exemplary embodiment of the present invention.
FIG. 4 is a front view illustrating a state in which a front panel of the remote controller is opened according to the exemplary embodiment of the present invention.
FIG. 5 is a sectional view taken on a line 5-5 in FIG. 3.
FIG. 6 is a block diagram illustrating the power control device according to the exemplary embodiment of the present invention.
FIG. 7 is a block diagram illustrating a main body receiver (infrared receiver) according to the exemplary embodiment of the present invention.
FIG. 8A is an explanatory view illustrating a remote control signal format.
FIG. 8B is an explanatory view illustrating a waveform of a leader portion in FIG. 8A.
FIG. 8C is an explanatory view illustrating a waveform of a data portion "0" in FIG. 8A.
FIG. 8D is an explanatory view illustrating a waveform of a data portion "1" in FIG. 8A.
FIG. 8E is an explanatory view illustrating a waveform of a trailer portion in FIG. 8A.
FIG. 9 is a configuration diagram illustrating a remote control signal according to the exemplary embodiment of the present invention.
FIG. 10A is a timing chart illustrating a data code of a dummy code in FIG. 9 and operation to intermittently drive a receiver.
FIG. 10B is a timing chart illustrating the data code of the dummy code in FIG. 9 and the operation to intermittently drive the receiver.
FIG. 11A is a block diagram illustrating a toilet seat and toilet lid opening and closing angle detection circuit in a conventional sanitary washing device.
FIG. 11B is a block diagram illustrating an improved design of FIG. 11A.
FIG. 11C is a block diagram illustrating a toilet seat and toilet lid opening and closing angle detection circuit in another configuration of a sanitary washing device according to the exemplary embodiment of the present invention.
FIG. 11D is a supplemental explanatory view of FIG. 11C.
FIG. 11E is a supplemental explanatory view of FIG. 11C.
FIG. 12A is a block diagram illustrating a communication circuit between a CPU and a sub-CPU of a power control device in the conventional sanitary washing device.
FIG. 12B is a view illustrating a configuration of a communication signal of the CPU and sub-CPU in FIG. 12A.
FIG. 13A is a block diagram illustrating a communication circuit between a CPU and a sub-CPU in the sanitary washing device according to the exemplary embodiment.
FIG. 13B is a block diagram illustrating the communication circuit between the CPU and the sub-CPU in the sanitary washing device according to the exemplary embodiment.
FIG. 13C is a block diagram illustrating the communication circuit between the CPU and the sub-CPU in the sanitary washing device according to the exemplary embodiment.
FIG. 14 is a flowchart illustrating control operation of the power control device according to the exemplary embodiment of the present invention.

### DESCRIPTION OF EMBODIMENTS

Hereinafter, a power control device and an instrument provided therewith according to an exemplary embodiment of the present invention will be described with reference to the drawings. However, the present invention is not limited to the exemplary embodiment.

### (Exemplary embodiment)

Referring to the drawings, the power control device and a sanitary washing device that is of the instrument provided therewith of the exemplary embodiment will be described below by taking toilet devices such as a sanitary washing device as an example.

### (Configuration of toilet device)

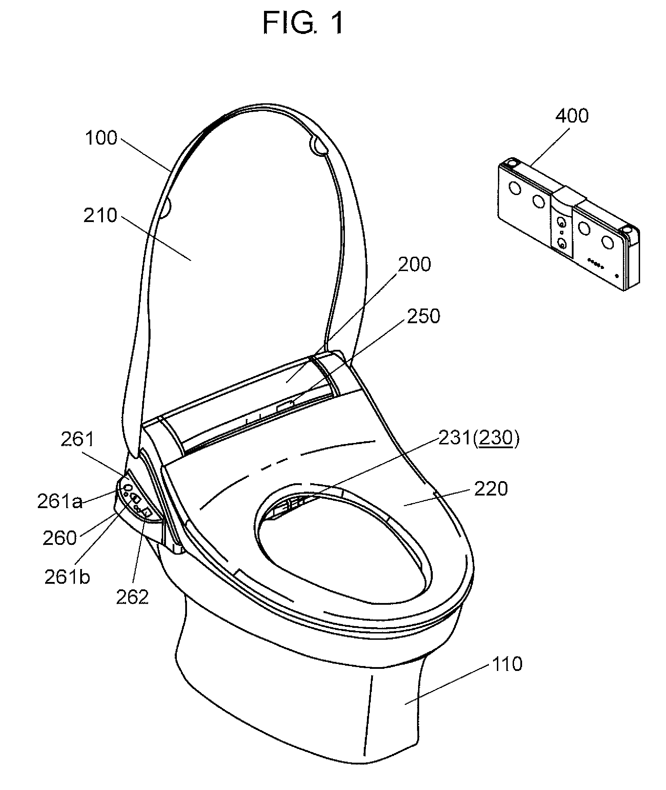

FIG. 1 is a perspective view illustrating appearances of a power control device and the sanitary washing device that is of the instrument provided therewith according to an exemplary embodiment of the present invention.

As illustrated in FIG. 1, sanitary washing device 100 of the exemplary embodiment is constructed with at least main body 200, toilet lid 210, toilet seat 220, and remote controller 400. Main body 200, toilet lid 210, and toilet seat 220 are integrally formed, and installed on a top surface of toilet bowl 110.

In the description about an arrangement of components of sanitary washing device 100 in FIG. 1, it is assumed that a side on which main body 200 is installed is rearward, that a side on which toilet seat 220 is installed is forward, that a forward right side is a right side, and that a forward left side is a left side.

Toilet lid 210 and toilet seat 220 are openably and closably attached to main body 200 with toilet seat and toilet lid turning mechanism 215 interposed therebetween. For example, toilet seat and toilet lid turning mechanism 215 is constructed with a DC motor and plural gears, and separately or simultaneously opens and closes toilet lid 210 and toilet seat 220. In the case that toilet lid 210 is opened, as illustrated in FIG. 1, toilet lid 210 is raised so as to position in a hindmost portion of sanitary washing device 100. On the other hand, in the case that toilet lid 210 is closed, toilet lid 210 shields the top surface of toilet seat 220.

Toilet seat 220 is provided with toilet seat heater 221, and toilet seat heater 221 heats a seating surface of toilet seat 220 to, for example, about 40 degrees Celsius such that the seating surface of toilet seat 220 becomes comfortable temperatures.

Washing mechanism 230, a drying device (not illustrated), and a main body controller 240 are incorporated in main body 200. Washing mechanism 230 is constructed with washing water supply mechanism (not illustrated), a heat exchanger (not illustrated), and washing nozzle 231 to wash a private area of a human body. The drying device dries the private area after the washing. Washing nozzle 231 is installed in a center of a lower portion of main body 200.

Washing mechanism 230 is constructed with a washing water supply mechanism (not illustrated) that is installed in main body 200, a heat exchanger (not illustrated) that heats washing water, and a flow rate adjusting mechanism (not illustrated) that adjusts a flow rate of the washing water. Washing mechanism 230 is connected to washing nozzle 231. The washing water supplied through a water pipe is heated by the heat exchanger, the heated warm water is supplied to washing nozzle 231, and the warm water is ejected from washing nozzle 231 toward the private area of a user. Therefore, the private area of the user is washed by the warm water.

Washing nozzle 231 includes a buttock washing nozzle that washes a buttock and a bidet nozzle that washes a female private area. Washing nozzle 231 also includes a nozzle driving mechanism (not illustrated) that proceeds and recedes between a storage position where washing nozzle 231 is accommodated in main body 200 and a washing position where washing nozzle 231 projects from main body 200 to perform the washing operation.

Seating sensor 250 constructed with, for example, a reflection type infrared sensor is installed in a corner portion of a front surface of main body 200. Seating sensor 250 emits an infrared ray and receives the infrared ray reflected from the human body, thereby detecting the user who exists on toilet seat 220.

Sleeve unit 260, which is formed integrally with main body 200 while projecting from main body 200, is provided on the right side of main body 200. Main body operation unit 261 and infrared receiver 262 are arranged on the top surface of sleeve unit 260. Infrared receiver 262 is a main body receiver that receives an infrared signal transmitted from remote controller 400. Power switch 261a and buttock washing switch 261b are arranged in main body operation unit 261. Buttock washing switch 261b operates a buttock washing function having a high use frequency.

As illustrated in FIG. 1, remote controller 400 is formed independently of main body 200, and attached to a position, such as a wall surface of a lavatory, where the user who sits on toilet seat 220 easily operates remote controller 400. Human body sensor 300 that detects the user who enters and exits the lavatory, plural switch functions that operate and set functions of sanitary washing device 100, and display function are arranged in remote controller 400.

Operation of sanitary washing device 100 of the exemplary embodiment will briefly be described below.

In the case that the user does not exist in the lavatory, sanitary washing device 100 stops energization to toilet seat heater 221 or energizes toilet seat heater 221 such that toilet seat 220 becomes a standby temperature of about 20°C.

At this point, when the user enters the lavatory, sanitary washing device 100 receives a human body detection signal from human body sensor 300 to energize toilet seat heater 221. A toilet seat heater is constructed with a high-output heater of about 800 W. Toilet seat heater 221 heats the seating surface of toilet seat 220 to a setting temperature of, for example, about 40°C in an time interval of about 6 seconds to about 10 seconds until the user sits on toilet seat 220 since the user enters the lavatory.

After toilet seat 220 reaches the setting temperature, toilet seat 220 is kept at the setting temperature by decreasing the energization to toilet seat heater 221 to as low as about 50 W.

When the user exits the lavatory, sanitary washing device 100 stops the energization to toilet seat heater 221 or energizes toilet seat heater 221 such that toilet seat 220 becomes the standby temperature of about 20°C. Therefore, power consumption of sanitary washing device 100 is largely reduced when the user does not exist in the lavatory.

In sanitary washing device 100 of the exemplary embodiment, because washing mechanism 230 constructed with washing nozzle 231 and the like and the drying device are not necessarily components, sanitary washing device 100 may not include washing mechanism 230 and the drying device.

### (Operation and action of sanitary washing device)

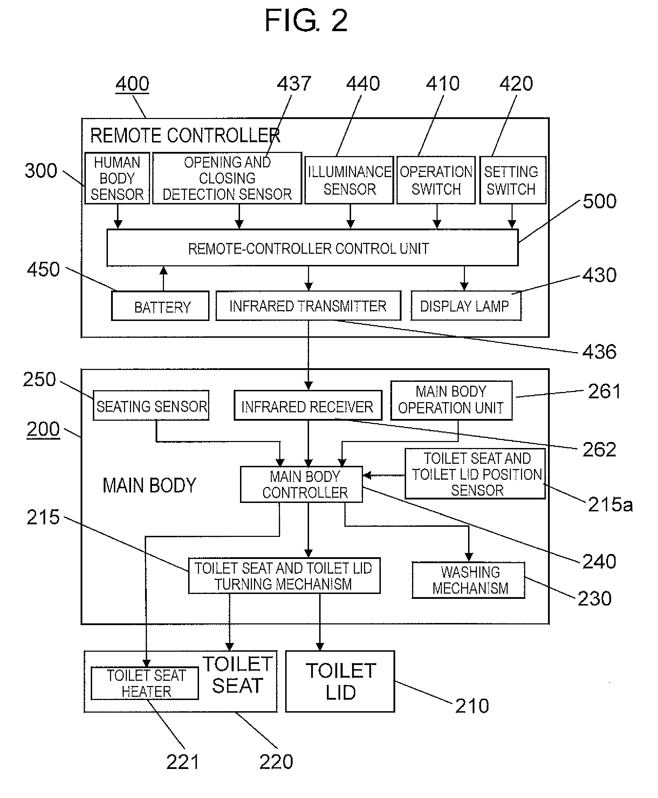

Operation and action of the sanitary washing device of the exemplary embodiment will be described below with reference to FIGS. 1 and 2.

FIG. 2 is a control block diagram of a control system of the sanitary washing device according to the exemplary embodiment.

As illustrated in FIGS. 1 and 2, when human body sensor 300 of remote controller 400 detects the human body, the human body detection signal is transmitted from infrared transmitter 436 of remote controller 400. The transmitted human body detection signal is received by main body receiver (infrared receiver) 262 of main body 200, and transmitted to main body controller 240. Based on the transmitted human body detection signal, main body controller 240 drives toilet seat and toilet lid turning mechanism 215 to open toilet lid 210. The energization to toilet seat heater 221 of toilet seat 220 is started to raise the temperature in order that the seating surface of toilet seat 220 becomes about 40°C within 10 seconds.

When the user sits on toilet seat 220, seating sensor 250 of main body 200 detects the seating of the user. When main body controller 240 receives a seating signal, the user can operate buttock washing switch 261b of main body 200 and the washing function of remote controller 400.

After the use of the toilet, washing mechanism 230 washes the private area of the user based on washing conditions of buttock washing switch 261b and remote controller 400, the washing conditions being set by the user. When the washing is ended, the user stands up from toilet seat 220, and exits the lavatory. Therefore, human body sensor 300 of remote controller 400 stops the transmission of the human body detection signal.

After predetermined time elapses (for example, after 5 minutes) since the detection of the human body is ended, main body controller 240 drives toilet seat and toilet lid turning mechanism 215 to automatically close toilet lid 210. The energization to toilet seat heater 221 is stopped. Then, main body controller 240 shifts to a standby power mode in which standby power is largely decreased until the user again enters the lavatory to use the toilet device.

### (Configuration of remote controller)

A configuration of the remote controller in the sanitary washing device of the exemplary embodiment will be described below with reference to FIGS. 2 to 5.

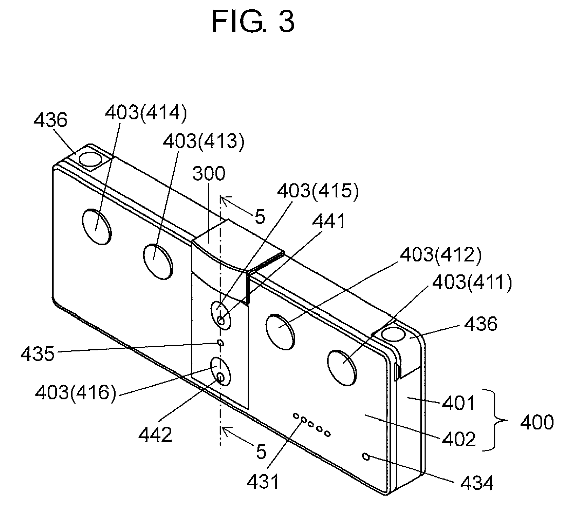

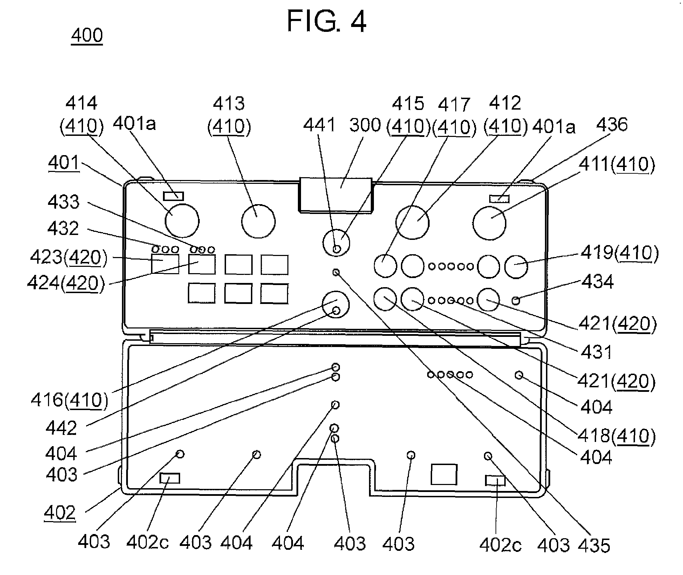

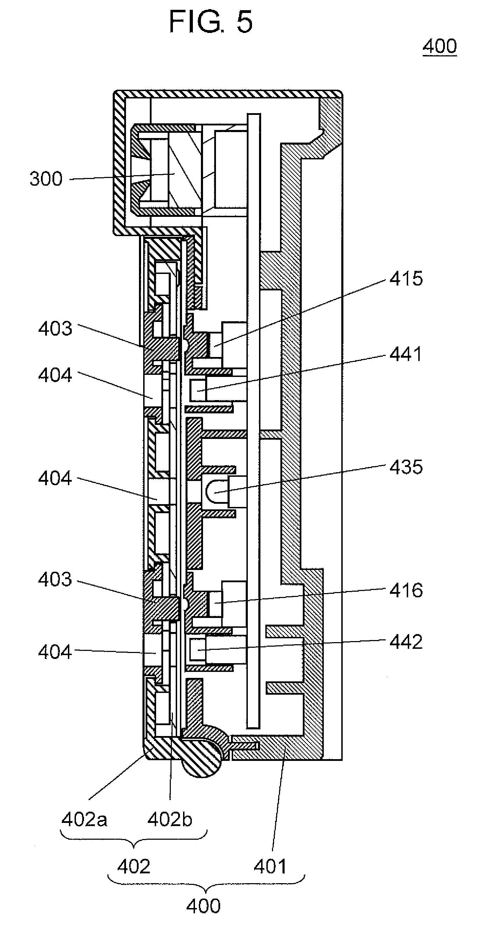

FIG. 3 is a perspective view illustrating an appearance of the remote controller according to the exemplary embodiment. FIG. 4 is a front view illustrating a state in which a front panel of the remote controller is opened according to the exemplary embodiment. FIG. 5 is a sectional view taken on a line 5-5 in FIG. 3.

As illustrated in FIG. 3, remote controller 400 is formed by a rectangular parallelepiped having a thin entire shape. Remote controller 400 is constructed with box-shaped remote controller body 401 molded using, for example, a resin material and front panel 402 that covers the front surface of remote controller body 401. Front panel 402 is openably and closably pivoted to a lower end portion of the front surface of remote controller body 401. Specifically, a closed state of front panel 402 is maintained by a magnetic force using magnets 401a provided on both sides near a top end of remote controller body 401 and stainless-steel support plates 402c provided at positions corresponding to magnets 401a of the front panel.

Usually remote controller 400 is used while front panel 402 is closed as illustrated in FIG. 3. In the case that the setting of remote controller 400 or unusual operation is performed, remote controller 400 is used while front panel 402 is opened as illustrated in FIG. 4.

As illustrated in FIGS. 2 and 4, when remote controller 400 is opened, operation switch 410 that is frequently used during the use of sanitary washing device 100 and human body sensor 300 are arranged in an upper portion of the front surface of the remote controller body 401. On the other hand, remote setting switch 420 that is used to set the function of sanitary washing device 100 and operation switch 410 that is not usually used are arranged in a lower portion of the front surface of remote controller body 401. Two illuminance sensors 440 that are used by non-contact operation and operation switch 410 that can be used by operation similar to the non-contact operation are arranged in a central portion of the front surface of remote controller body 401. Operation switch 410 or setting switch 420 is constructed with a tact switch that is of a contact switch that is operated by directly contacting with an operation unit of the switch.

As illustrated in FIG. 3, bidet washing switch 411, buttock washing switch 412, drying switch 413, stopping switch 414, toilet seat opening switch 415, and toilet seat closing switch 416 are arranged in front panel 402 as operation switch 410 that is usually used with front panel 402 of remote controller 400 being closed. Bidet washing switch 411 is used to start the washing of the female private area. Buttock washing switch 412 is used to start the washing of the buttock. Drying switch 413 is used to start the drying of the buttock after the washing. Stopping switch 414 is used to stop the operations that are started using bidet washing switch 411, buttock washing switch 412, and drying switch 413. Toilet seat opening switch 415 is used to raise toilet seat 220. Toilet seat closing switch 416 is used to lay toilet seat 220. Toilet seat opening switch 415 and toilet seat closing switch 416 are arranged with a predetermined space on an identical perpendicular line.

As illustrated in FIG. 4, for example, rhythm switch 417, wide switch 418, and movement switch 419 are arranged in remote controller body 401 as operation switch 410 that can be used only with front panel 402 being opened. Rhythm switch 417 is used to strongly and weakly change the washing water during the buttock washing. Wide switch 418 is used to enlarge or reduce an ejection range of the washing water during the buttock washing. Movement switch 419 is used to repeatedly move a washing position forward and rearward during the washing.

As illustrated in FIG. 4, intensity display lamp 431, warm water temperature display lamp 432, toilet seat temperature display lamp 433, and battery display lamp 434 are provided in remote controller body 401. Intensity display lamp 431 is provided near intensity switch 421 to display an intensity level of the washing water. Warm water temperature display lamp 432 is provided near warm water temperature switch 423 to display a setting level of a warm water temperature. Toilet seat temperature display lamp 433 is provided near toilet seat temperature switch 424 to display a setting level of a toilet seat temperature. Battery display lamp 434 displays a consumption level of a battery.

As illustrated in FIG. 4, first illuminance sensor 441, second illuminance sensor 442, and sensor detection display lamp 435 are provided in remote controller body 401. First illuminance sensor 441 is provided beneath toilet seat opening switch 415. Second illuminance sensor 442 is provided beneath toilet seat closing switch 416.

Sensor detection display lamp 435 is arranged at a substantially intermediate (or intermediate) position between toilet seat opening switch 415 and toilet seat closing switch 416. Sensor detection display lamp 435 performs blinking in the case that first illuminance sensor 441 and second illuminance sensor 442 cannot sufficiently detect a change in illuminance because of the dark lavatory. On the other hand, sensor detection display lamp 435 performs lighting when a gesture operation is detected. As used herein, the gesture operation means that the user performs predetermined operation by a gesture of a user's hand near and across two illuminance sensors 440 constructed with first illuminance sensor 441 and second illuminance sensor 442.

That is, the user performs the gesture by moving the hand in a neighborhood of first and second illuminance sensors 441 and 442 constructed with non-contact switches. The change in illuminance is detected to determine a moving direction and, for example, the gesture operation to raise and lay toilet seat 220 is performed according to the moving direction. Specifically, for example, the user moves the hand upward to raise toilet seat 220 in the case that second illuminance sensor 442 and first illuminance sensor 441 sequentially detect the change in illuminance. On the other hand, for example, the user moves the hand downward to lay toilet seat 220 in the case that first illuminance sensor 441 and second illuminance sensor 442 sequentially detect the change in illuminance. Therefore, even for a lack of illuminance, the operation to open and close toilet seat 220 can be performed in a non-contact manner by the gesture operation.

As illustrated in FIGS. 3 and 4, infrared transmitter 436 is arranged in a corner portion of the top surface of remote controller body 401. For example, infrared transmitter 436 includes an infrared light emitting diode as a light emitting element. Infrared transmitter 436 transmits operation information and setting information on remote controller 400 to infrared receiver 262 installed in sleeve unit 260 of main body 200.

As illustrated in FIGS. 2 and 5, front panel 402 of remote controller 400 is constructed with resin substantially planar (or planar) panel frame 402a, back cover 402b, and plural operation buttons 403. Operation button 403 is used to operate operation switch 410 installed in remote controller body 401 from the surface of front panel 402. That is, operation button 403 is installed according to the positions of bidet washing switch 411, buttock washing switch 412, drying switch 413, stopping switch 414, toilet seat opening switch 415, and toilet seat closing switch 416 in order that bidet washing switch 411, buttock washing switch 412, drying switch 413, stopping switch 414, toilet seat opening switch 415, and toilet seat closing switch 416 are operated with front panel 402 being closed.

Transparent units 404 made of a transparent resin material are provided in front panel 402 of remote controller 400. Transparent units 404 are formed in portions corresponding to first illuminance sensor 441, second illuminance sensor 442, intensity display lamp 431, and battery display lamp 434. Intensity display lamp 431 and battery display lamp 434 can visually be recognized from the surface of front panel 402. First illuminance sensor 441 and second illuminance sensor 442 detect the change in illuminance through transparent unit 404, so that the gesture operation can be performed while the front panel 402 is closed.

In the exemplary embodiment, first illuminance sensor 441 and second illuminance sensor 442 detect the change in illuminance caused by the gesture operation, which allows the user to perform the operation to raise and lay toilet lid 210 and toilet seat 220. In the case that the user changes the setting condition, there is a possibility that the change in illuminance due to a shade generated during the operation to open and close front panel 402 is falsely detected as the gesture operation. Therefore, as illustrated in FIG. 2, opening and closing detection sensor 437 is provided to detect the opening and closing states of front panel 402. Accordingly, the operation to raise and lay toilet seat 220 is not performed even if first illuminance sensor 441 and second illuminance sensor 442 detect the change in illuminance during the operation to open and close front panel 402.

### (Configuration of control system of remote controller)

A configuration of a control system of the remote controller in the sanitary washing device of the exemplary embodiment will be described below with reference to FIG. 2.

As illustrated in FIG. 2, remote controller 400 includes human body sensor 300, opening and closing detection sensor 437, operation switch 410, setting switch 420, and illuminance sensor 440 as an information input unit. Remote controller 400 includes infrared transmitter 436 that transmits infrared control information to main body 200 and display lamp 430 that displays the control information as an output unit. Remote controller 400 includes battery 450 as a driving source for remote controller 400.

Although not illustrated, remote-controller control unit 500 of remote controller 400 includes a sensor detector, a switch operation detector, and a gesture detector. The sensor detector detects a detection signal of a sensor. The switch operation detector detects the switch operations of operation switch 410 and setting switch 420. The gesture detector digitizes and detects a gesture operation signal from illuminance sensor 440 that is constructed with first illuminance sensor 441 and second illuminance sensor 442. Therefore, various pieces of operation information are processed.

As described above, the gesture detector performs digital processing by digitizing the detection voltage of illuminance sensor 440 using an A/D converter. However, the gesture detector has large power consumption, and largely influences the consumption of battery 450 that is of a power supply for remote controller 400. In the configuration of the exemplary embodiment, the gesture detector is driven only while human body sensor 300 detects the human body. Therefore, while human body sensor 300 does not detect the human body, the gesture detector is stopped to constrain the consumption of battery 450.

In order to detect the gesture operation, remote controller 400 includes a sensor driving unit that drives illuminance sensor 440 and a sensitivity adjuster that adjusts sensitivity of illuminance sensor 440. According to a change in brightness of a place where remote controller 400 is installed, the sensitivity adjuster adjusts a reference voltage that becomes a reference of detecting the gesture operation and a detection threshold for the gesture operation. At this point, in the case that darkness of the place where remote controller 400 is installed exceeds an adjustment range of the reference voltage, sensor detection display lamp 435 in FIGS. 3 and 4 performs the blinking display to inform the user that the gesture operation is hardly performed.

Remote-controller control unit 500 of remote controller 400 includes a battery inspection unit that detects a remaining level of battery 450, a display lamp driver that drives display lamp 430 to display the control information, and a timer that provides timing information. The battery inspection unit, the display lamp driver, and the timer are not illustrated. Remote-controller control unit 500 includes an information processor that is mainly constructed with a microcomputer as an information processing function.

The control system of the remote controller in the sanitary washing device of the exemplary embodiment is constructed as described above.

That is, as illustrated in FIG. 2, various pieces of operation information are input to remote controller 400 having the above configuration from operation switch 410, setting switch 420, first illuminance sensor 441, and second illuminance sensor 442 that are of the operation unit. Based on the input operation information, the information processor of remote-controller control unit 500 determines what kind of operation, and predetermined display lamp 430 is lit through the display lamp driving unit to cause the user to recognize the operation.

Remote-controller control unit 500 of remote controller 400 transmits a control signal from infrared transmitter 436 to infrared receiver 262 of main body 200. Therefore, main body controller 240 controls various functions of sanitary washing device 100 based on the transmitted control signal.

### (Configuration of power control device)

A configuration of the power control device in the sanitary washing device of the exemplary embodiment will be described below with reference to FIGS. 1 to 6.

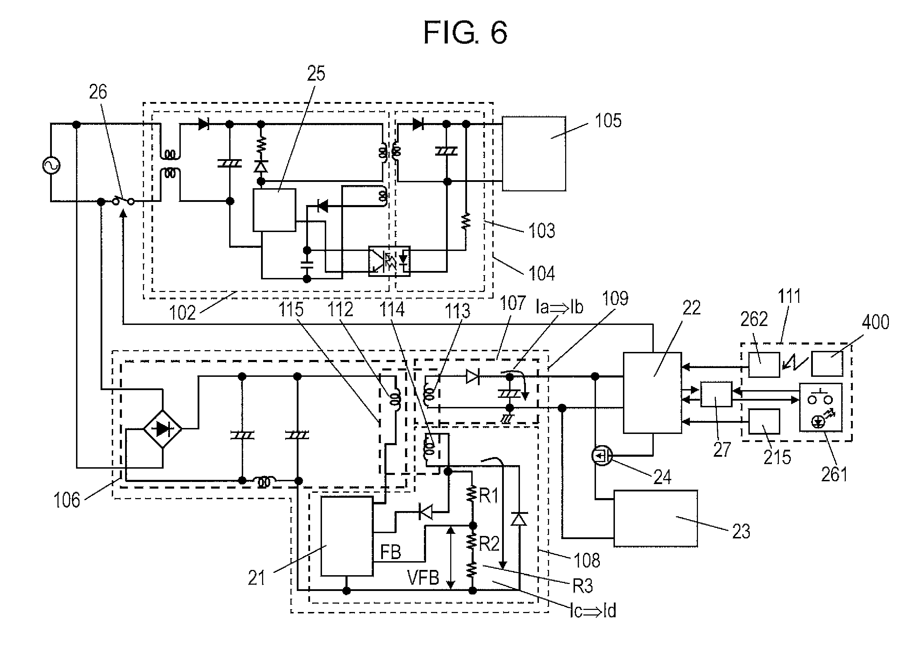

FIG. 6 is a block diagram illustrating the power control device according to the exemplary embodiment.

As illustrated in FIG. 6, the power control device of the exemplary embodiment is constructed with at least main power supply 104 and auxiliary power supply 109. Main power supply 104 is constructed with main power supply input unit 102 and main power supply output unit 103 including main power supply control IC 25 constituting a main power supply control element. Main power supply 104 supplies the power to output-side loads 105 controlled by main body controller 240. Output-side loads 105 includes washing mechanism 230 that is of the functional unit of sanitary washing device 100, toilet seat heater 221, a heat exchanger heater, a deodorizing fan, and a drying fan.

On the other hand, auxiliary power supply 109 is constructed with auxiliary power supply input unit 106, auxiliary power supply output unit 107, and auxiliary power supply mode switching controller 108. For example, auxiliary power supply 109 supplies the power to CPU 22 constituting the controller and secondary-side loads 23. CPU 22 outputs the instruction to switch between the standby power mode and the normal power mode based on the signal from use detector 111. Examples of secondary-side loads 23 include a toilet seat thermistor that detects a toilet seat temperature, an influent water thermistor that detects influent water of a heat exchanger, an outflow warm water thermistor that detects an outflow warm water temperature of the heat exchanger, and excessive temperature rise preventing circuits of toilet seat 220 and the heat exchanger. CPU 22 controls connection and disconnection between the commercial power and main power supply 104 using relay 26.

Remote controller 400 and main body receiver (infrared receiver) 262 that are described above (operation and action of sanitary washing device) correspond to use detector 111 in FIG. 6, and a use detection signal is transmitted from use detector 111 to CPU 22.

Use detector 111 also includes a configuration in which the user operates operation switch 410 of remote controller 400 to transmit the use detection signal from remote controller 400 to main body receiver (infrared receiver) 262.

Use detector 111 also includes a configuration in which a signal is transmitted from toilet seat and toilet lid turning mechanism 215 to CPU 22 as the signal detecting the use of the instrument when the user manually opens toilet lid 210 or toilet seat 220.

Use detector 111 also includes a configuration in which a signal is transmitted from main body operation unit 261 to CPU 22 as the signal detecting the use of the instrument like the case that buttock washing switch 261b of main body operation unit 261 is operated.

As illustrated in FIG. 6, auxiliary power supply 109 includes transformer 115 that is constructed with primary winding 112 provided in auxiliary power supply input unit 106, secondary winding 113 provided in auxiliary power supply output unit 107, and auxiliary secondary winding 114 provided in auxiliary power supply mode switching controller 108. For example, auxiliary power supply mode switching controller 108 includes auxiliary power supply control IC 21 constituting the auxiliary power supply control element.

The power control device of sanitary washing device 100 of the exemplary embodiment is constructed as described above.

At this point, when the use detection signal (the signal indicating non-use of the instrument) is transmitted from use detector 111 to CPU 22, CPU 22 interrupts the commercial power supplied to main power supply 104 in response to the switching instruction into the standby power mode. At the same time, CPU 22 shifts to the standby power mode that is of a low-speed mode. Auxiliary power supply control IC 21 of auxiliary power supply mode switching controller 108 enters the standby power mode in which intermittent driving and stopping of auxiliary power supply 109 are repeated by the current decrease of auxiliary secondary winding 114 due to the current decrease of secondary winding 113 of transformer 115. Therefore, the standby power can be reduced to substantially zero. As a result, the power control device that largely reduces the standby power and the instrument provided with the power control device can be made.

### (Operation and action of power control device)

Operation and action of the power control device of the exemplary embodiment will be described below with reference to FIG. 6.

As described above in the standby power mode (operation and action of sanitary washing device), when the condition that CPU 22 shifts to the standby power mode is satisfied by the signal transmitted from use detector 111 to CPU 22, CPU 22 interrupts secondary-side load 23 using secondary-side load interrupting element 24 in FIG. 6. At the same time, CPU 22 shifts from a high-speed mode to the low-speed mode. Therefore, a power load on the side of secondary winding 113 of transformer 115 further decreases.

That is, when receiving the use detection signal indicating the non-use of the instrument from use detector 111, CPU 22 interrupts secondary-side load 23 using secondary-side load interrupting element 24. At the same time, CPU 22 shifts from a high-speed mode to the low-speed mode. Therefore, as illustrated in FIG. 6, a current passing through secondary winding 113 of transformer 115 decreases from Ia to Ib, and the standby power decreases. A current passing through auxiliary secondary winding 114 of transformer 115 also changes from Ic to Id according to secondary-side load 23.

Referring to FIG. 6, in voltage VFB applied to an FB terminal of auxiliary power supply control IC 21, normal-operation voltage VFB1 (in the case that the current passing through secondary winding 113 of transformer 115 is Ia) becomes VFB1 = (R2 + R3) × Ic/(R1 + R2 + R3).

On the other hand, when CPU 22 interrupts the secondary-side load, auxiliary power supply mode switching controller 108 shifts to the operation in the standby power mode in which the current passing through secondary winding 113 of transformer 115 decreases from Ia to Ib. At this point, during the operation in the standby power mode, voltage VFB2 applied to the FB terminal of auxiliary power supply control IC 21 becomes VFB2 = (R2 + R3) × Id/(R1 + R2 + R3).

When voltage VFB2 applied to the FB terminal of auxiliary power supply control IC 21 decreases lower than predetermined voltage Vref, auxiliary power supply control IC 21 shifts to the standby power mode.

CPU 22 interrupts secondary-side load 23, CPU 22 sets itself to the low-speed mode, and auxiliary power supply mode switching controller 108 sets to auxiliary power supply control IC 21 to the standby power mode, whereby auxiliary power supply control IC 21 shifts to the standby power mode in which the intermittent driving and stopping are repeated. In the exemplary embodiment, in the standby power mode, auxiliary power supply control IC 21 becomes the state in which the intermittent driving and stopping are repeated with, for example, driving time of 1 ms and stopping time of 24 ms.

When voltage VFB2 applied to the FB terminal of auxiliary power supply control IC 21 decreases lower than predetermined voltage Vref, output current Id and resistances R1, R, and R3 of auxiliary secondary winding 114 are properly set such that auxiliary power supply control IC 21 enters the standby power mode.

As described above, in the power control device of the exemplary embodiment, when the condition that CPU 22 shifts from the normal power mode to the standby power mode is satisfied by the signal from use detector 111, CPU 22 interrupts the commercial power supplied to the main power supply 104, and interrupts secondary-side load 23 of auxiliary power supply 109.

At the same time, CPU 22 shifts to the standby power mode that is of a low-speed mode. Auxiliary power supply control IC 21 of auxiliary power supply switching controller 108 enters the standby power mode in which the intermittent driving and stopping of the auxiliary power supply are repeated by the current decrease of auxiliary secondary winding 114 of transformer 115 due to the current decrease of the secondary winding 113 of transformer 115.

Therefore, in the standby power mode, the commercial power supplied to main power supply 104 is interrupted to eliminate the power consumption in main power supply 104 and output-side load 105 corresponding to main power supply 104.

Secondary-side load 23 of auxiliary power supply 109 is interrupted, and auxiliary power supply 109 enters the standby power mode in which the intermittent driving and stopping are repeated. Therefore, the standby power is reduced to a value of about 0.004 watt that is of substantially zero during the non-use of the instrument (sanitary washing device). As a result, the power control device that largely reduces the standby power and the instrument (sanitary washing device) provided with the power control device can be made.

In the exemplary embodiment, unless auxiliary power supply mode switching controller 108 exists, the power control device is operated as follows.

When the condition that CPU 22 shifts from the normal power mode to the standby power mode is satisfied by the signal from use detector 111, CPU 22 interrupts the commercial power supplied to the main power supply 104. At the same time, secondary-side load 23 of auxiliary power supply 109 is interrupted. CPU 22 shifts to the standby power mode that is of the low-speed mode. Therefore, the standby power can be reduced to about 0.7 watt.

However, in the configuration in which auxiliary power supply mode switching controller 108 does not exist, the standby power becomes about 175 times that of the power control device of the exemplary embodiment. That is, the power control device of the exemplary embodiment including auxiliary power supply mode switching controller 108 has the effect that the standby power is largely reduced.

### (Transmission signal of remote controller)

A configuration of the remote controller in the sanitary washing device of the exemplary embodiment will be described below with reference to FIGS. 6 to 10B.

A remote control signal transmitted from remote controller 400 to infrared receiver 262 that is of the main body receiver of use detector 111 in FIG. 6 will be described below.

As described above, the sanitary washing device of the exemplary embodiment includes remote controller 400 provided with human body sensor 300 that detects a human who enters and exists the lavatory. When the human is detected, or when operation switch 410 arranged in remote controller 400 is operated, infrared transmitter 436 transmits an infrared signal. The transmitted infrared signal is received by the main body receiver (infrared receiver) of main body 200, and the received signal is input to CPU 22 of main body 200.

At this point, in the case that the power control device is in the standby power mode in which the standby power is reduced, it is necessary to switch the power control device from the standby power mode to the normal mode when human body sensor 300 detects the human or when operation switch 410 of remote controller 400 is operated by the human.

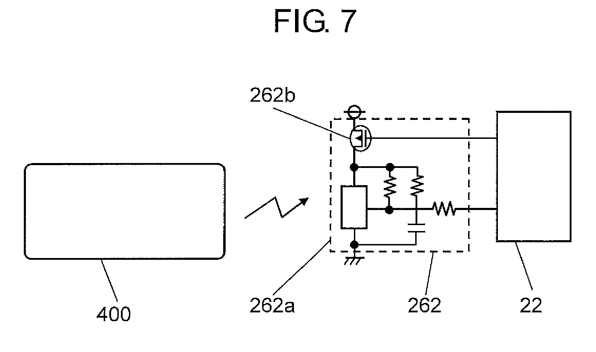

Operation to switch the power control device from the standby power mode to the normal mode will be described below with reference to FIG. 7.

FIG. 7 is a block diagram illustrating the main body receiver (infrared receiver) according to the exemplary embodiment of the present invention.

As illustrated in FIG. 7, in main body receiver (infrared receiver) 262 of the exemplary embodiment, power interrupting element 262b is inserted between auxiliary power supply 109 and receiver (light receiving unit) 262a that receives the remote control signal.

In the standby power mode, CPU 22 performs controls such that receiver (light receiving unit) 262a that receives the remote control signal repeats the intermittent driving and stopping with the driving time of 1 ms and the stopping time of 24 ms 1 ms using power interrupting element 262b.

The conventional main body receiver (infrared receiver) does not include the power interrupting element that intermittently drives and stops the receiver (light receiving unit) receiving the remote control signal in the standby power mode. Therefore, the receiver (light receiving unit) is always energized. As a result, the large standby power is uselessly consumed.

On the other hand, power interrupting element 262b that is operated so as to intermittently drive and stop the receiver (light receiving unit) 262a receiving the remote control signal in the standby power mode is provided in main body receiver (infrared receiver) 262 of the exemplary embodiment. Therefore, the standby power is reduced.

However, in the configuration of main body receiver (infrared receiver) 262 in which power interrupting element 262b is provided, sometimes the remote control signal is not received or a malfunction is generated.

Generally, the remote controller is used in not only the sanitary washing device of the exemplary embodiment but also almost electric appliances such as an air conditioner, a TV receiver, and a DVD player. Due to the remote control signal transmitted from another household remote controller, sometimes the correct remote control signal is not received or the malfunction is generated in main body receiver (infrared receiver) 262 of the sanitary washing device.

There is a transmission signal format recommended by Association for Electric Home Appliances in order to identify the remote control signal transmitted from each instrument.

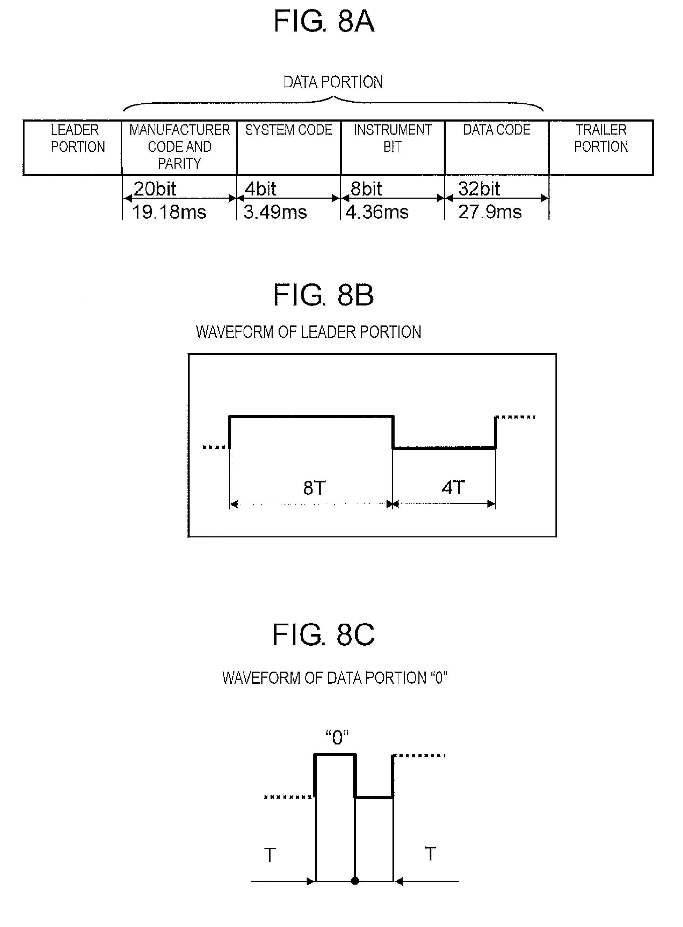

A general transmission signal format recommended by Association for Electric Home Appliances will be described below with reference to FIGS. 8A to 8D.

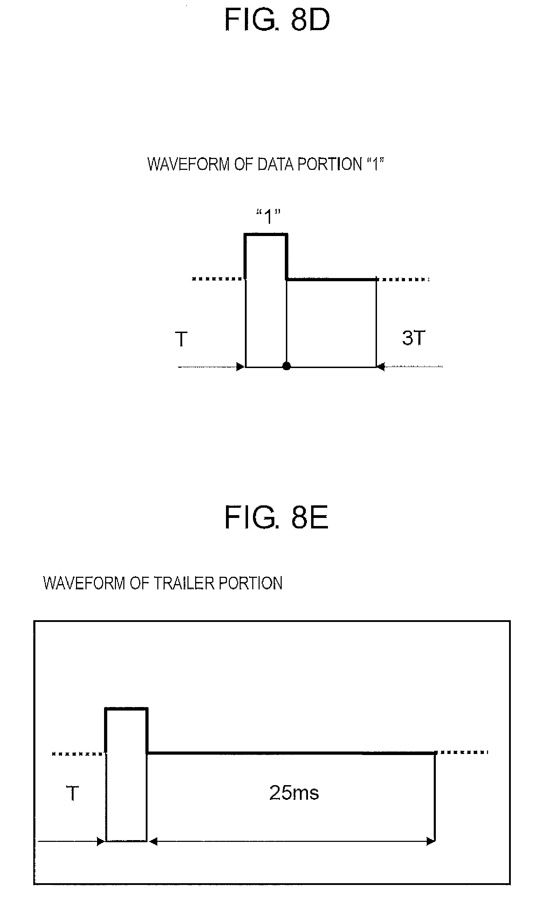

FIG. 8A is an explanatory view illustrating the remote control signal format. FIG. 8B is an explanatory view illustrating a waveform of a leader portion in FIG. 8A. FIG. 8C is an explanatory view illustrating a waveform of a data portion "0" in FIG. 8A. FIG. 8D is an explanatory view illustrating a waveform of a data portion "1" in FIG. 8A. FIG. 8E is an explanatory view illustrating a waveform of a trailer portion in FIG. 8A.

As illustrated in FIGS. 8A to 8E, the transmission signal is constructed with "H" and "L", and includes the leader portion, the data portion, and the trailer portion. A configuration of the transmission signal is defined by Association for Electric Home Appliances to prevent the malfunction caused by the remote control signal of each manufacturer.

The leader portion constituting the transmission signal indicates a head portion of the signal, the data portion is constructed with a manufacturer code identifying the manufacturer, a custom code (instrument code) identifying the instrument, and a data code controlling the instrument, and the trailer portion indicates ending of the signal.

In FIGS. 8B to 8E, T indicates basic time of a pulse. For example, T is 436 µs.

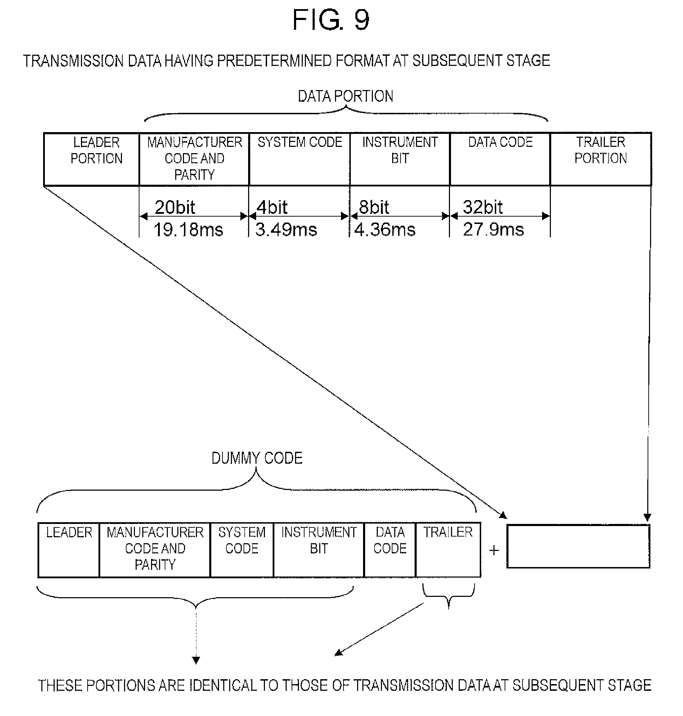

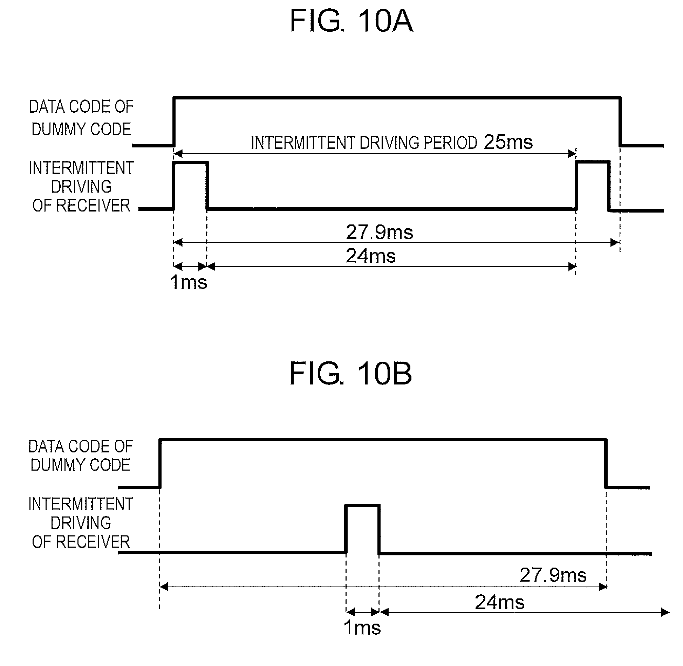

A configuration and action of the remote control signal, which main body receiver (infrared receiver) 262 surely receives to operate a remote controller receiving function comparable to the normal mode when the human body is detected or when operation switch 410 of remote controller 400 is operated in the standby power mode of the exemplary embodiment, will be described below with reference to FIGS. 9, 10A, and 10B.

FIG. 9 is a configuration diagram illustrating the remote control signal according to the exemplary embodiment. FIGS. 10A and 10B are timing charts illustrating the data code of the dummy code in FIG. 9 and the operation to intermittently drive the receiver.

As illustrated in FIGS. 9 to 10B, the remote control signal of the exemplary embodiment includes a dummy code at a preceding stage of the remote control signal in FIG. 8A including the leader portion, the data portion, and the trailer portion. The dummy code includes the leader portion, data portion, trailer portion, and data code in FIG. 8A. In the data code, for example, all data are constructed with bit data of "0". The data code is longer than an intermittent driving and stopping repetitive period of receiver (light receiving unit) 262a in the standby power mode of CPU 22.

In the exemplary embodiment, when the human body is detected or when operation switch 410 of remote controller 400 is operated, infrared transmitter 436 of remote controller 400 transmits the remote control signal including the dummy code to receiver (light receiving unit) 262a of main body receiver (infrared receiver) 262.

At this point, in the remote control signal, all data of the 32-bit data code are set to "0" in the dummy code at the preceding stage of the transmission data having the predetermined format. Therefore, as illustrated in FIGS. 10A and 10B, the data code of the dummy code has a total length of 27.9 ms (2T × 32).

On the other hand, in the standby power mode, receiver (light receiving unit) 262a of the power control device of the sanitary washing device receives the remote control signal in which the intermittent driving and stopping are repeated with the driving time of 1 ms and the stopping time of 24 ms as illustrated in FIGS. 10A and 10B. That is, in the standby power mode, auxiliary power supply control IC 21 of the power control device is driven in an intermittent driving period of 25 ms.

In the case that the head of the data code of the dummy code is matched with the head of the intermittent driving of receiver (light receiving unit) 262a as illustrated in FIG. 10A, receiver 262a can detect a signal change in which a signal level of the data code "0" of the dummy code changes from "H" to "L" or "L" to "H" at the driving time of 1 ms. In the case that the head of the data code of the dummy code is not matched with the head of the intermittent driving of receiver (light receiving unit) 262a as illustrated in FIG. 10B, receiver 262a can surely detect a signal change in which a signal level of the data code "0" of the dummy code changes from "H" to "L" or "L" to "H" at the driving time of 1 ms.

Therefore, even in the case that receiver (light receiving unit) 262a is intermittently driven while the power control device is in the standby power mode, CPU 22 can recognize that the remote control signal including the dummy code is transmitted. As a result, CPU 22 can shift from the standby power mode to the normal mode.

That is, in the exemplary embodiment, when the human body is detected or when operation switch 410 of remote controller 400 is operated, the remote control signal is surely received to be able to operate the remote controller receiving function comparable to the normal mode even in the standby power mode.

The reason where all data of the 32-bit data code of the dummy code are set to "0" in the exemplary embodiment will be described below.

As described above, when all the 32 bits of the data code are set to "0", the total length of the data code becomes 27.9 ms, and is longer than the intermittent driving and stopping repetitive period of 25 ms of receiver 262a. Therefore, the timing that the intermittent driving of receiver 262a is turned on and off can surely overlap the transmission period of the data code of the dummy code. As a result, the shift can surely be made from the standby power mode to the normal power mode.

The data code "0" of the dummy code has the period "L" of 0.436 ms, and is shorter than the driving time of 1 ms of receiver 262a. Therefore, the signal change from "H" to "L" or "L" to "H" can be detected. However, as illustrated in FIG. 8D, the data portion of "1" has the period "L" of 1.308 ms (3T), and is longer than the driving time of 1 ms of receiver 262a. When the data code of "1" of the dummy code is generated, sometimes the signal change from "H" to "L" or "L" to "H" cannot be detected. Therefore, all the 32 bits of the data code are set to "0".

The remote control signal is constructed with the leader portion, the data portion constructed with a signal having a predetermined format corresponding to a manufacturer or a model, and the trailer portion. The data code at the preceding stage of the trailer portion is longer than the intermittent driving and stopping repetitive period of receiver (receiving unit) 262a in the standby power mode of CPU 22, and used as the dummy code in which all data of the data code are set to the identical bit data. When the above condition is satisfied, sometimes the signal change in which the signal level of the data code "0" of the dummy code changes from "H" to "L" or "L" to "H" can surely be detected. That is, the driving time of receiver 262a is set longer than 1 ms, which allows the above condition to be satisfied.

In the remote control signal, another combination of the dummy code and the transmission data having the predetermined format is used as one signal such that receiver (receiving unit) 262a can surely receive the remote control signal.

When the data code of the dummy code is set to "0", the above condition can be satisfied by minimizing the driving time of receiver 262a. As a result, the standby power can be minimized.

The standby power can be reduced by forming the remote control signal transmitted from remote controller 400 in the above manner. That is, when the human body is detected or when operation switch 410 of remote controller 400 is operated, the remote control signal is surely received to be able to operate the sanitary washing device by the remote controller receiving function comparable to the normal mode even in the standby power mode.

### (Configuration of toilet seat and toilet lid opening and closing detection circuit)

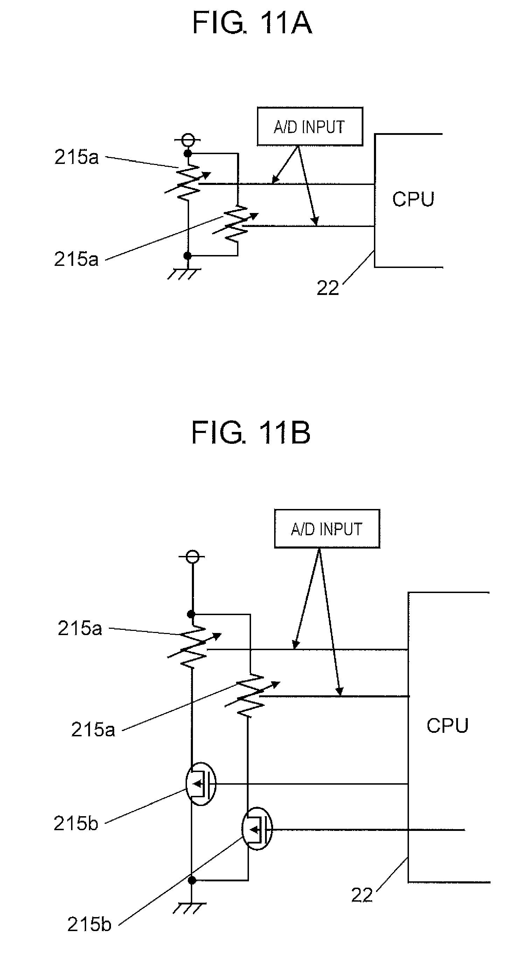

A circuit configuration that switches from the standby power mode to the normal mode when toilet lid 210 and toilet seat 220 are manually opened and closed in the sanitary washing device provided with the power control device of the exemplary embodiment will be described below with reference to FIGS. 2 and 11A to 11D.

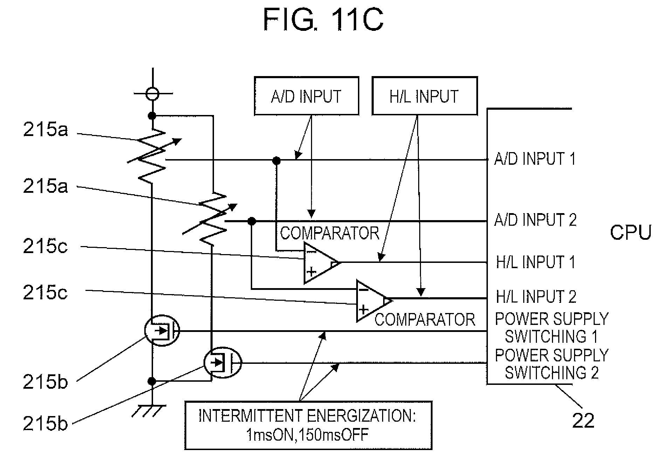

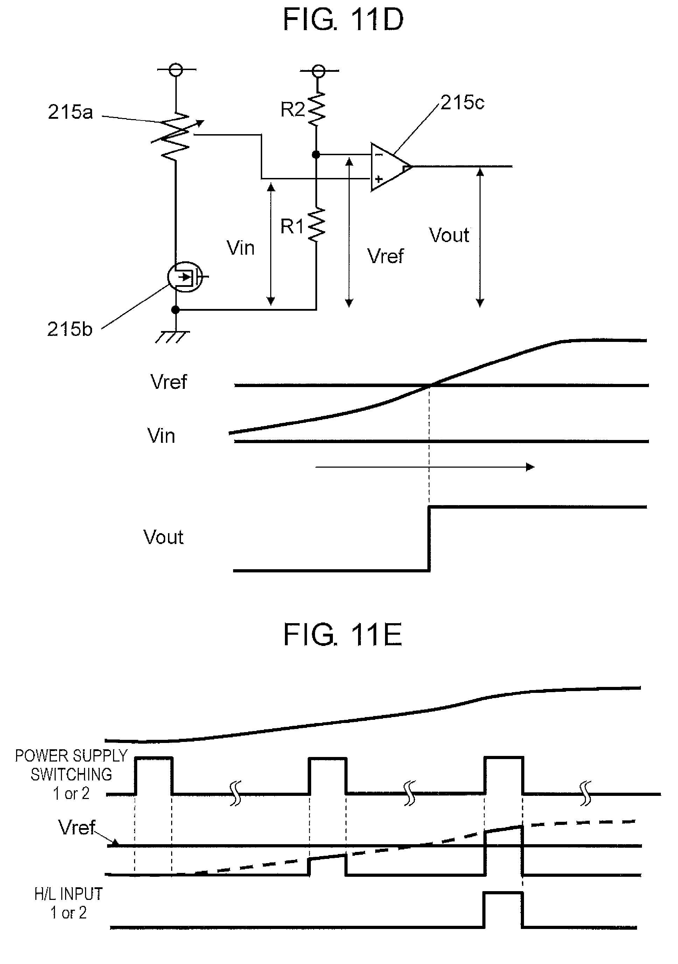

FIG. 11A is a block diagram illustrating a toilet seat and toilet lid opening and closing angle detection circuit in a conventional sanitary washing device. FIG. 11B is a block diagram illustrating an improved design of FIG. 11A. FIG. 11C is a block diagram illustrating a toilet seat and toilet lid opening and closing angle detection circuit in another configuration of a sanitary washing device according to the exemplary embodiment of the present invention. FIG. 11D is a supplemental explanatory view of FIG. 11C. FIG. 11E is a supplemental explanatory view of FIG. 11C.

As illustrated in FIG. 2, in the configuration of the sanitary washing device that automatically opens and closes toilet seat 220 and toilet lid 210, main body 200 further includes toilet seat and toilet lid turning mechanism 215 and opening and closing angle detecting sensor 215a. Toilet seat and toilet lid turning mechanism 215 opens and closes toilet seat 220 and toilet lid 210 using operation switch 410 used to open and close toilet seat 220 and toilet lid 210. Opening and closing angle detecting sensor 215a detects opening and closing angles of toilet seat 220 and toilet lid 210 in order to smoothly open and close toilet seat 220 and toilet lid 210.

A toilet seat and toilet lid opening and closing angle detection circuit of the conventional sanitary washing device will be described with reference to FIG. 11A.

As illustrated in FIG. 11A, for the conventional toilet seat and toilet lid opening and closing angle detection circuit, the current is always passing through a resistor of opening and closing angle detecting sensor 215a in the standby power mode. Therefore, the power consumption increases in the standby power mode.

Like an improved plan in FIG. 11B of the conventional toilet seat and toilet lid opening and closing angle detection circuit, power switching element 215b that can turn on and off the energization to opening and closing angle detecting sensor 215a is provided, and CPU 22 controls power switching element 215b. Therefore, the current is prevented from always passing through the resistor of opening and closing angle detecting sensor 215a, and the increase of the power consumption is constrained.

However, usually an A/D signal is input to CPU 22 according to the opening and closing of toilet seat 220 and toilet lid 210. Even if the current passing through opening and closing angle detecting sensor 215a is interrupted, the input of the A/D signal to CPU 22 increases the power consumption of CPU 22 due to, for example, processing time. That is, sometimes the power consumption cannot be largely reduced.

As illustrated in FIG. 11C, in the configuration of the toilet seat and toilet lid opening and closing detection circuit of the exemplary embodiment, the A/D signal is switched to a normal H/L input signal, and CPU 22 is also put into the standby state to constrain the power in the standby power mode.

The toilet seat and toilet lid opening and closing detection circuit in FIG. 11C includes comparator 215c that switches the H/L input signal from "L" to "H" when the sensor output of opening and closing angle detecting sensor 215a and A/D input signal becomes a predetermined input or more.

At this point, as illustrated in FIG. 11D, voltage Vin is input to a positive terminal side of comparator 215c according to the opening and closing angles of toilet seat 220 and toilet lid 210. On the other hand, a voltage of R1 × V/(R1 + R2) is input to a negative terminal side of comparator 215c. The voltage of R1 × V/(R1 + R2) is a reference voltage Vref that is determined depending on resistances R1 and R2. When voltage Vin input to the positive terminal side of comparator 215c becomes reference voltage Vref or less, output Vout of comparator 215c is switched from the "H" level to the "L" level. When voltage Vin input to the positive terminal side of the comparator 215c becomes reference voltage Vref or more, output Vout of comparator 215c is switched from the "L" level to the "H" level.

As to reference voltage Vref, preferably resistances R1 and R2 are decided such that output signal Vout of comparator 215c is inverted when the opening and closing angles of toilet seat 220 and toilet lid 210 are located at an intermediate position.

Specific operation of the toilet seat and toilet lid opening and closing detection circuit of the exemplary embodiment will be described below.

In the case that the sanitary washing device is operated in the normal power mode, CPU 22 in FIG. 11C outputs the "H"-level signals from power supply switching 1 and power supply switching 2 to always put power switching element 215b of opening and closing angle detecting sensor 215a into the [ON] state. CPU 22 switches A/D input 1 and A/D input 2 such that information on an angle position can be detected.

On the other hand, in the case that CPU 22 enters the standby power mode, the outputs of power supply switching 1 and power supply switching 2 are switched to the intermittent energization with the driving time of 1 ms and the stopping time of 150 ms. At the same time, CPU 22 switches A/D input 1 and A/D input 2 to H/L input 1 and H/L input 2. Therefore, the consumption current of opening and closing angle detecting sensor 215a and the consumption current of CPU 22 are constrained.

When power switching element 215b of opening and closing angle detecting sensor 215a is turned on in the standby power mode, voltage Vin of opening and closing angle detecting sensor 215a is input to the negative terminal side of comparator 215c.

At this point, in the case that the opening and closing angles of toilet seat 220 and toilet lid 210 are located on the closed side with respect to the intermediate position as illustrated in FIG. HE (Vin < Vref), the output of comparator 215c is maintained at the "L" level, and the standby power mode is maintained. On the other hand, in the case that the opening and closing angles of toilet seat 220 and toilet lid 210 are located on the opened side with respect to the intermediate position (Vin > Vref), the output of comparator 215c changes from the "L" level to the "H" level. Therefore, CPU 22 is switched from the standby power mode to the normal power mode to perform the operation in the normal power mode.

As described above, in the configuration of the toilet seat and toilet lid opening and closing detection circuit, CPU 22 switches between the standby power mode and the normal power mode according to the opening and closing of toilet seat 220 and toilet lid 210. Therefore, the standby power in the standby power mode can be reduced to achieve the energy saving. Additionally, the opening and closing operations of the toilet seat and toilet lid can smoothly be performed comparable to the operations during the usual continuous energization.

### (Communication with sub-CPU)

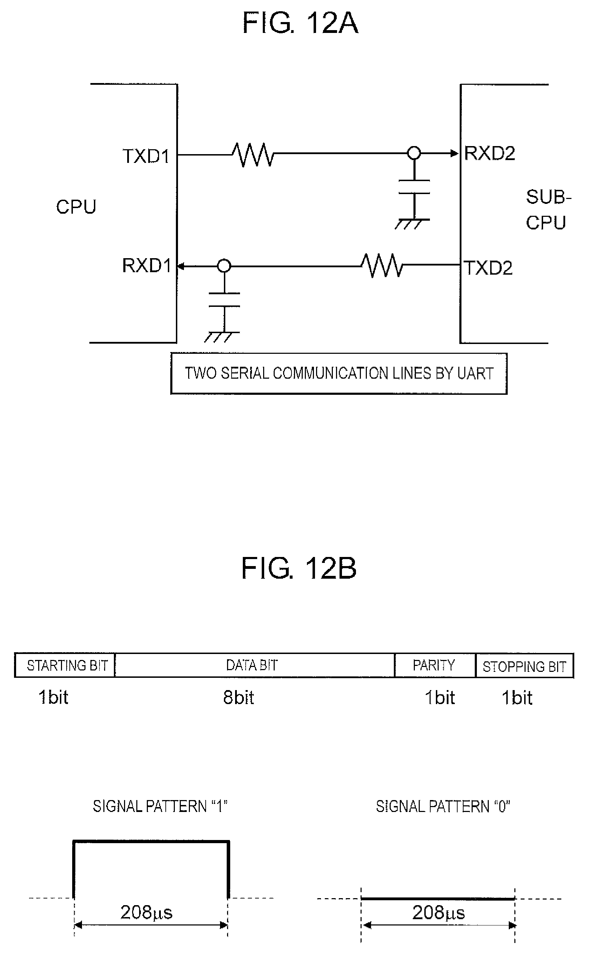

Communication between sub-CPU 27 of main body operation unit 261 and CPU 22 of main body controller 240 in the sanitary washing device provided with the power control device of the exemplary embodiment will be described below with reference to FIGS. 12A to 13C.

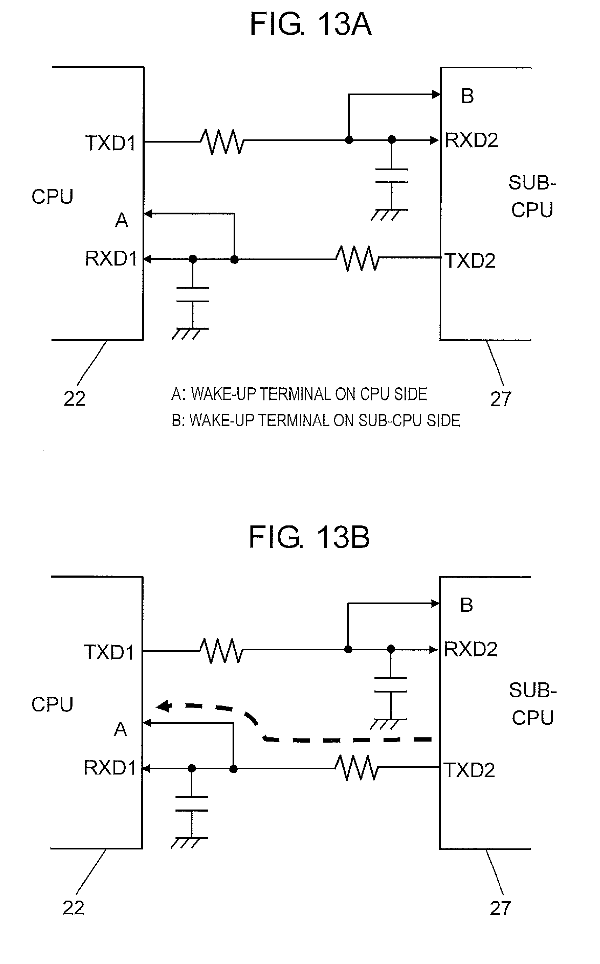

FIG. 12A is a block diagram illustrating a communication circuit between a CPU and a sub-CPU of a power control device in the conventional sanitary washing device. FIG. 12B is a view illustrating a configuration of a communication signal of the CPU and sub-CPU in FIG. 12A. FIGS. 13A to 13C are block diagrams illustrating a communication circuit between a CPU and a sub-CPU in the sanitary washing device of the exemplary embodiment.

A configuration example of a conventional communication circuit between a usual CPU (main) and another CPU (sub) acting as another function will be described with reference to FIGS. 12A and 12B. As illustrated in FIG. 12B, in a communication signal between the CPU (main) and the CPU (sub), one code is constructed with 11 bits each of which has "0" or "1".

In the conventional communication circuit between the CPU (main) and CPU (sub) in FIG. 12A, there is a risk that the communication can hardly be conducted due to a processing ability in the case that main CPU 22 is set to the low-speed mode in the standby power mode. When the main CPU is set to a speed mode at which the communication can be conducted, there is a problem in that the power consumption increases.

As illustrated in FIG. 13A, in the communication circuit of the exemplary embodiment between main CPU 22 and sub-CPU 27, main CPU 22 includes communication terminals TXD1 and RXD1, and sub-CPU 27 includes communication terminals TXD2 and RXD2. Communication terminals TXD1 and RXD1 and communication terminals TXD2 and RXD2 transmit the signals to each other. Main CPU 22 and sub-CPU 27 include wake-up terminals A and B, respectively.

In the communication circuit in FIG. 13A between main CPU 22 and sub-CPU 27, main CPU 22 and sub-CPU 27 transmit the signals to each other using the communication terminals in the normal power mode.

At this point, as described above (operations and action of power control device), when the condition that main CPU 22 enters the standby power mode is satisfied, the signal is transmitted from communication terminal TXD1 of CPU 22 to communication terminal RXD2 of sub-CPU 27. Therefore, sub-CPU 27 enters a stopping mode. In sub-CPU 27, communication terminal RXD2 is switched to wake-up terminal B.

At the same time, main CPU 22 stops the communication processing. In main CPU 22, communication terminal RXD1 is switched to wake-up terminal A.

Therefore, main CPU 22 enters the standby power mode, and sub-CPU 27 enters the stopping mode, thereby reducing the standby power. At this point, when the user operates main body operation unit 261 provided in sleeve unit 260 of main body 200, the signal in which the "L" is changed to the "H" level is transmitted from communication terminal TXD2 of sub-CPU 27 to wake-up terminal A of main CPU 22 as illustrated in FIG. 13B.

Main CPU 22 is switched from the standby power mode to the normal power mode by the input signal in which the "L" is changed to the "H" level. Therefore, communication terminal RXD1 of CPU 22 becomes a usable state.

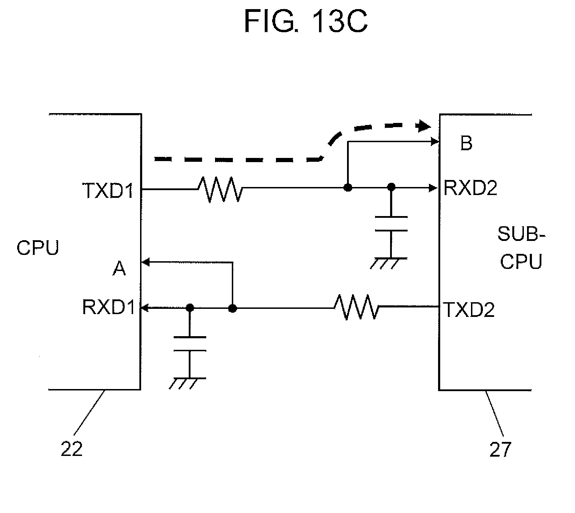

In the case that main CPU 22 is switched to the normal power mode, and to switch sub-CPU 27 from the standby power mode to the normal power mode, the signal in which the "L" is changed to the "H" level is output from communication terminal TXD1 of main CPU 22 as illustrated in FIG. 13C. The signal output from communication terminal TXD1 of main CPU 22 is input to wake-up terminal B of sub-CPU 27, and sub-CPU 27 is switched from the standby power mode to the normal power mode. Therefore, the communication circuit between main CPU 22 and sub-CPU 27 is switched to the usual communication terminals (TXD1, RXD1, TXD2, and RXD2),

As described above, the signal in which the "L" is changed to the "H" level is input to the wake-up terminals provided in the main CPU and sub-CPU to switch the main CPU and the sub-CPU from the standby power mode to the normal power mode. Therefore, in the standby power mode, the communication processing between at least two CPUs can be performed while the energy saving is achieved. A number of wiring lines can be decreased using both the communication terminal and the wake-up terminal.

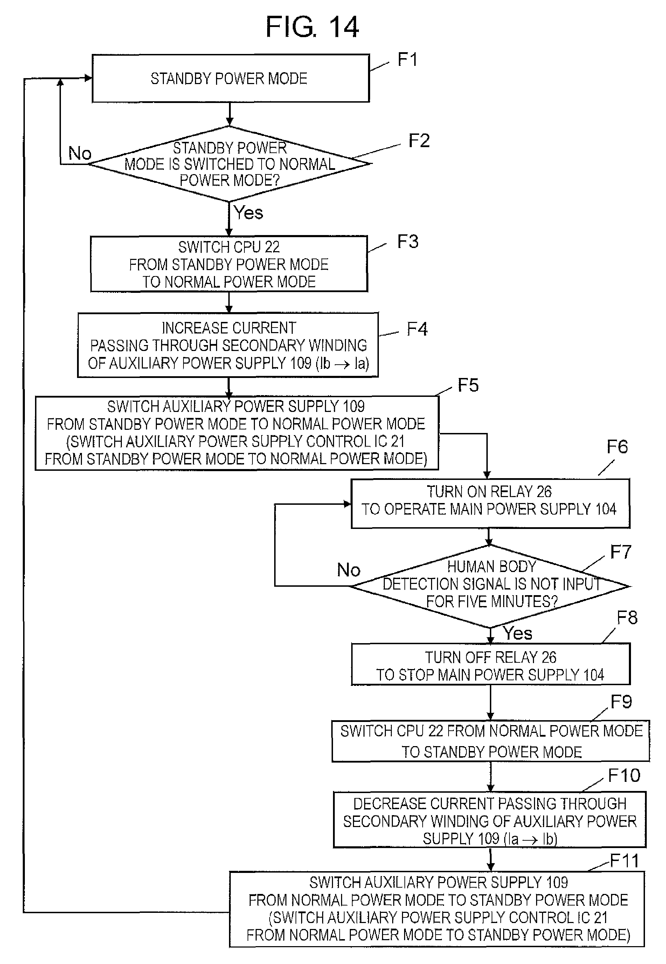

Control operation to switch between the standby power mode and the normal power mode in the power control device of the exemplary embodiment will briefly described below with reference to FIG. 14.

FIG. 14 is a flowchart illustrating the control operation of the power control device according to the exemplary embodiment of the present invention.

As illustrated in FIG. 14, in the case that the power control device of the sanitary washing device is in the standby power mode (Step F1), whether the standby power mode is switched to the normal power mode is determined (Step F2). When the standby power mode is not switched to the normal power mode (No in Step F2), the power control device waits.

On the other hand, when the standby power mode is switched to the normal power mode (Yes in Step F2), CPU 22 is switched from the standby power mode to the normal power mode (Step F3). Therefore, the current passing through the secondary winding of auxiliary power supply 109 of the power control device increases from Ib to Ia (Step F4).

Auxiliary power supply 109 and auxiliary power supply control IC 21 are switched from the standby power mode to the normal power mode (Step F5).

CPU 22 turns on relay 26 to supply the power from the commercial power source to main power supply 104, thereby operating main power supply 104 (Step F6).

Whether the human body detection signal is input is determined for five minutes (Step F7). When the human body detection signal is input (No in Step F7), the power control device is driven to continue the washing operation of the sanitary washing device.

On the other hand, when the five minutes elapse while the human body detection signal is not input human body (Yes in Step F7), CPU 22 turns off relay 26 to stop the power supplied from the commercial power supply to main power supply 104, thereby stopping the operation of main power supply 104 (Step F8). Therefore, CPU 22 is switched from the normal power mode to the standby power mode (Step F9).

The current passing through the secondary winding of auxiliary power supply 109 of the power control device decreases from Ia to Ib (Step F10).

Auxiliary power supply 109 and auxiliary power supply control IC 21 are switched from the normal power mode to the standby power mode (Step F11).

Thus, the power control device of the exemplary embodiment is operated while being switched between the standby power mode and the normal power mode.

As described above, the power control device of the exemplary embodiment includes main power supply 104 that supplies the power to the instrument, use detector 111 that detects the use of the instrument, CPU 22 that outputs the instruction to switch between the standby power mode and the normal power mode in response to the signal from use detector 111, auxiliary power supply 109 that supplies the power to CPU 22, and transformer 115. Transformer 115 includes primary winding 112 provided in auxiliary power supply input unit 106 of auxiliary power supply 109, secondary winding provided in auxiliary power supply output unit 107, and auxiliary secondary winding 114 provided in auxiliary power supply mode switching controller 108 including auxiliary power supply control IC. In response to a switching instruction into the standby power mode, CPU 22 performs control such that CPU 22 shifts to the standby power mode that is of the low-speed mode while interrupting the commercial power supplied to main power supply 104, and such that auxiliary power supply control IC 21 repeats intermittent driving and stopping of auxiliary power supply 109 by the current decrease of auxiliary secondary winding 114 due to the current decrease of secondary winding 113.

In the configuration, when the condition that CPU 22 shifts from the normal power mode to the standby power mode is satisfied by the signal from use detector 111, as illustrated in Steps F7 and F8 of FIG. 14, CPU 22 interrupts the commercial power supplied to main power supply 104, and interrupts secondary-side load 23 of auxiliary power supply 109.

As illustrated in Step F9 of FIG. 14, CPU 22 shifts to the standby power mode that is of the low-speed mode. At this point, as illustrated in Step F10 of FIG. 14, the current passing through auxiliary secondary winding 114 of transformer 115 decreases due to the decrease in current passing through secondary winding 113 of transformer 115. As illustrated in Step F11 of FIG. 14, auxiliary power supply control IC 21 of auxiliary power supply mode switching controller 108 enters the standby power mode in which the intermittent driving and stopping of the auxiliary power supply 109 are repeated.

Therefore, in the standby power mode, the commercial power supplied to main power supply 104 is interrupted to eliminate the power consumption in main power supply 104 and output-side load 105 corresponding to main power supply 104.

Secondary-side load 23 of auxiliary power supply 109 is interrupted, and auxiliary power supply 109 enters the standby power mode in which the intermittent driving and stopping are repeated. Therefore, the standby power can be reduced to substantially zero during non-use of the instrument. As a result, the power control device that largely reduces the standby power and the instrument, such as the sanitary washing device, which is provided with the power control device, can be made.

In the power control device of the exemplary embodiment, use detector 111 includes remote controller 400 that transmits the remote control signal to the instrument and main body receiver 262 that receives the remote control signal. The remote control signal includes the dummy code at the preceding stage of the transmission data. The transmission data includes the leader portion, the data portion and the trailer portion. The dummy code includes the leader portion, the data portion, the trailer portion, and the data code. In the dummy code, the data code may be longer than the intermittent driving and stopping repetitive period of main body receiver 262 in the standby power mode of CPU 22, and all data of the data code may be set to the identical bit data.

Therefore, in the standby power mode, the remote controller receiving function comparable to the usual operation can be implemented while the energy saving is achieved.

In the power control device of the exemplary embodiment, the data code of the dummy code may be formed of 32 bits, and all data of the data code may be formed from bit data of "0".

Therefore, in the standby power mode of the instrument, the energy saving of the standby power can largely be achieved during the non-use of the instrument. Additionally, the remote controller receiving function comparable to the usual operation can be implemented.

The instrument of the exemplary embodiment may include the power control device. Therefore, the standby power of the instrument can largely be reduced.

In the exemplary embodiment, by way of example, the sanitary washing device is described as the instrument provided with the power control device. However, the instrument is not limited to the sanitary washing device. For example, the instrument may be an air conditioner or a TV receiver, which is provided with the remote controller such as an operating remote controller. Therefore, the effect that the standby power is largely reduced is obtained similarly to the sanitary washing device.

### INDUSTRIAL APPLICABILITY

The present invention can be applied to a technical field of the instrument that includes the power control device while the human body sensor and the remote controller are installed, the power control device being required to largely reduce the standby power when the instrument is not used.

### REFERENCE MARKS IN THE DRAWINGS

- 21: auxiliary power supply control IC
- 22: CPU
- 23: secondary-side load
- 24: secondary-side load interrupting element
- 25: main power supply control IC
- 26: relay
- 27: sub-CPU
- 100: sanitary washing device
- 102: main power supply input unit
- 103: main power supply output unit
- 104: main power supply
- 105: output-side load (functional unit)
- 106: auxiliary power supply input unit
- 107: auxiliary power supply output unit
- 108: auxiliary power supply mode switching controller
- 109: auxiliary power supply
- 110: toilet bowl
- 111: use detector
- 112: primary winding
- 113: secondary winding
- 114: auxiliary secondary winding
- 115: transformer
- 200: main body
- 210: toilet lid
- 215: toilet seat and toilet lid turning mechanism
- 215a: opening and closing angle detecting sensor (toilet seat and toilet lid position sensor)
- 215b: power switching element
- 215c: comparator
- 220: toilet seat
- 221: toilet seat heater
- 230: washing mechanism
- 231: washing nozzle
- 240: main body controller
- 250: seating sensor
- 260: sleeve unit
- 261: main body operation unit
- 261a: power switch
- 261b: buttock washing switch
- 262: main body receiver (infrared receiver)
- 262a: receiver (light receiving unit)
- 262b: power interrupting element
- 300: human body sensor
- 400: remote controller (operation remote controller)
- 401: remote controller body
- 401a: magnet
- 402: front panel (outline)
- 402a: panel frame
- 402b: back cover
- 402c: support plate
- 403: operation button
- 404: transparent unit
- 410: operation switch
- 411: bidet washing switch
- 412: buttock washing switch
- 413: drying switch
- 414: stopping switch
- 415: toilet seat opening switch
- 416: toilet seat closing switch
- 417: rhythm switch
- 418: wide switch
- 419: movement switch
- 420: setting switch
- 421: intensity switch
- 423: warm water temperature switch
- 424: toilet seat temperature switch
- 430: display lamp
- 431: intensity display lamp
- 432: warm water temperature display lamp
- 433: toilet seat temperature display lamp
- 434: battery display lamp
- 435: sensor detection display lamp
- 436: infrared transmitter
- 437: opening and closing detection sensor
- 440: illuminance sensor
- 441: first illuminance sensor
- 442: second illuminance sensor
- 450: battery
- 500: remote-controller control unit

## Claims

1. A power control device comprising:
a main power supply that supplies power to an instrument;
a use detector that detects use of the instrument;
a CPU that issues an instruction to switch between a standby power mode and a normal power mode in response to a signal from the use detector;
an auxiliary power supply that supplies power to the CPU; and
a transformer, wherein
the transformer includes a primary winding provided in an auxiliary power supply input unit of the auxiliary power supply, a secondary winding provided in an auxiliary power supply output unit, and an auxiliary secondary winding provided in an auxiliary power supply mode switching controller including an auxiliary power supply control IC, and
in response to a switching instruction into the standby power mode, the CPU performs control such that the CPU itself shifts to the standby power mode while interrupting commercial power supplied to the main power supply, and such that the auxiliary power supply control IC repeats intermittent driving and stopping of the auxiliary power supply by a current decrease of the auxiliary secondary winding due to a current decrease of the secondary winding.

2. The power control device according to claim 1, wherein the use detector includes a remote controller that transmits a remote control signal to the instrument, and a main body receiver that receives the remote control signal,
the remote control signal includes transmission data including a leader portion, a data portion and a trailer portion, and a dummy code located at a preceding stage of the transmission data, the dummy code including a leader portion, a data portion, a trailer portion, and a data code, and
the dummy code is configured such that all data of the data code are formed from identical bit data, and time of the data code is longer than an intermittent driving and stopping repetitive period of the main body receiver in the standby power mode of the CPU.

3. The power control device according to claim 1, wherein the data code of the dummy code is formed of 32 bits, and all data of the data code are formed from bit data of "0".

4. An instrument comprising the power control device according to claim 1.
